# EUROPÄISCHE PATENTSCHRIFT

(11) **EP 1 217 286 B1**
(45) Veröffentlichungstag und Bekanntmachung des Hinweises auf die Patenterteilung: **15.09.2004**
(21) Anmeldenummer: 01126186.4
(22) Anmeldetag: 05.11.2001
(51) Int. Cl.: F16L 39/00

(54) **Anordnung zur Verbindung von zwei doppelwandig verlegten Rohrleitungen**
Device to connect two double-walled pipes
Dispositif de raccordement pour deux tubes à double paroi

(30) Priorität: 22.12.2000 DE 10064227
(43) Veröffentlichungstag der Anmeldung: 26.06.2002
(73) Patentinhaber: Airbus Deutschland GmbH, 21129 Hamburg (DE)
(72) Erfinder: Pöhler, Matthias, 22297 Hamburg (DE)
(74) Vertreter: Hansmann, Dierk, Dipl.-Ing.

(56) Entgegenhaltungen:
- EP-A- 0 087 652
- DE-A- 3 836 326
- DE-C- 399 192
- US-A- 5 141 256

## Beschreibung

Die Erfindung bezieht sich auf eine Anordnung zur Verbindung von zwei doppelwandig verlegten Rohrleitungen gemäß dem Oberbegriff des Anspruchs 1. Eine solche Anordnung ist z.B. aus Dokument US 5 141 256 bekannt. Mit ihr werden treibstoffführende Rohrleitungen rationell montiert und gewartet. Dabei lassen sich alle installierten Dichtelemente, deren Dichtvermögen im Bereich von Verbindungsstellen dieser doppelwandigen Rohrleitungen nachlässt, unkompliziert austauschen. Außerdem wird die Zugänglichkeit an diese doppelwandige Rohrleitungsinstallation und deren prophylaktische Kontrolle innerhalb einem eng bemessenen Handhabungsbereich verbessert. Außerdem besteht während der Wartung derartiger Leitungsverbindungen keine Gefahr der elektrischen Leitungsunterbrechung zwischen der Rohrleitungsverbindung und einer ihr angeschlossenen metallenen Struktur. Ein wiederholtes mechanisches Ausrichten der Rohrleitungsverbindung ist nach Beendigung der Wartung nicht erforderlich.

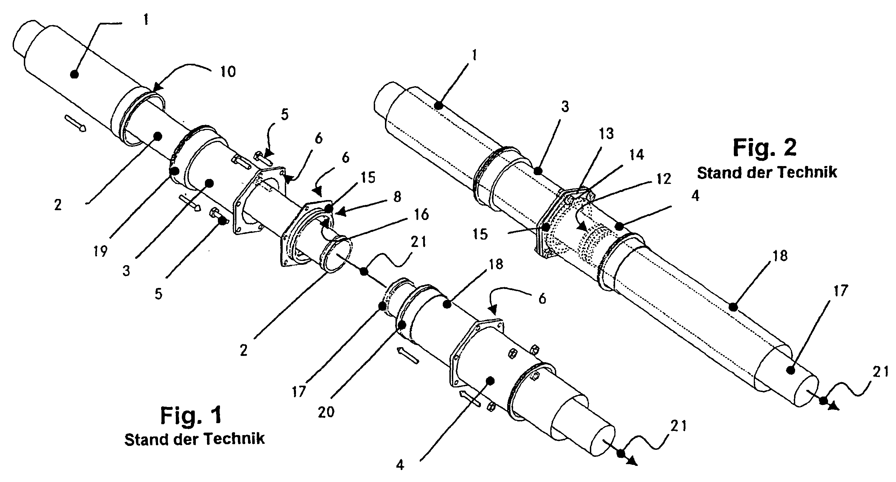

Derartige Anordnungen wird der im Flugzeugbau tätige Fachmann bei Installationen von Trimmtankleitungen für den Airbus A300, A310, A330 und A340 beobachten, die mit doppelwandigen Rohrleitungen ausgeführt sind. Diese Trimmtankleitungen werden - nach dem Vorbild der Figuren 1 und 2 - verlegt, wobei auf die übliche Ausführung der Verbindung von zwei Trimmtankleitungen später (mit einem Beispiel) näher eingegangen wird. Diese Verbindungsart bringt (zumindest im Flugzeugbau) für das Montage- und auch Wartungspersonal gewisse Nachteile mit sich. Einerseits wurde die Realisierung derartiger Leitungsverbindungen langzeitlich nicht montagefreundlich verbessert und gleichfalls nicht rationalisiert. Andererseits findet man (aufgrund vorhandener beengter Raumverhältnisse) im Wartungsfall einen ungünstigen Zugang der Leitungsinstallation (im Flugzeug) vor, weshalb sich im Bereich der Verbindungsstellen dieser doppelwandig ausgeführten Rohrleitungen alle Dichtungs-elemente, deren Dichtungsvermögen (bspw. bedingt durch Alterung) nachlässt, nur beschwerlich austauschen lassen. Eine erleichterte Zugänglichkeit an diese doppelwandige(n) Rohrleitungs-installation(en) und deren prophylaktische Kontrolle wird der Flugzeugbauer, dessen Tätigkeit innerhalb einem eng bemessen Raum (Handbereich) stattfinden wird, wohl kaum bestätigen. Außerdem wird nicht gewährleistet, dass eine ständige elektrische Verbindung der Rohrleitungs-Anordnung mit der Flugzeugstruktur während der Ausführung von Wartungsarbeiten (wegen der ständigen Aufrechterhaltung des Blitzschutz-Potentialausgleiches) aufrecht erhalten bleibt, weil zum Dichtungswechsel - wegen der Zugänglichkeit an die Dichtungselemente einer leckenden Rohrleitungsverbindung - der Leitungsweg zwangsläufig unterbrochen werden muss. Ein nachfolgendes Ausrichten der Leitungsverbindung nach dem Abschluss der Wartung begleitet diese Maßnahme(n).

Außerdem ist aus der DE 399 192 C (CFCMUG) vom 28. Juli 1924 eine Rohrverbindung für konzentrisch ineinanderliegende Rohrleitungen bekannt, nach der an den Rohrleitungsabschnitten zweier äußerer Rohrleitungen, die axial angeordnet sind, rohrendseitig jeweils eine kegelförmig gestaltete Hülse befestigt ist. Die Anordnung berücksichtigt wegen der beabsichtigten Rohrverbindung, dass die Wandungsbereiche der beiden Hülsen, die einen größeren Hülsen(außen)durchmesser besitzen, gegenüberstehend angeordnet werden, wobei auf dem kegelförmigen Außenbereich der Hülsenwandung entsprechende Dichtungsringe angeordnet werden, deren ebenfalls kegelförmig gestaltete Ringinnenwandung der Kegelform des Außenbereiches der Hülsenwandung angepasst ist, dabei außerdem auf der (glatten) Ringaußenwandung der Dichtungsringe ein Außengewinde aufgebracht ist. Auf dieses Außengewinde der (auf dem Außenbereich der Hülsenwandung von jeder Hülse angeordneten) Dichtungsringe, von denen ein Dichtungsring mit einem Linksgewinde als Außengewinde und ein weiterer Dichtungsring mit einem Rechtsgewinde als Außengewinde versehen ist oder umgekehrt, wird eine Rohrmuffe aufgeschraubt, die (durch das Aufschrauben der Muffe) diese Dichtungsringe auf die Hülsen aufzwingen wird und so die zu verbindenden Rohrabschnitte zusammenhalten soll. Druckschriftlich wird auch erwähnt, dass durch die (bloße) Drehung der Muffe sich die Ringe entweder nach innen oder nach außen bewegen werden, also entweder axial näher oder auf Distanz bewegt werden, und dadurch eine (mechanische) Verbindung der beiden äußeren Rohre geschlossen oder gelöst wird. Auf Angaben, welche sich auf die Verbindung der beiden inneren Rohrleitungen für konzentrisch ineinanderliegende Rohrleitungen beziehen, wird nur soweit eingegangen, wonach druckschriftlich erwähnt wird, dass die Verbindung(stelle) der(s) Innenrohre(s) nach einem Lösen der (vorgestellten und bekannten Umsetzung einer) Schraubenmuffe(nverbindung) ohne weiteres zugänglich wird, wobei normale Rohre zur Verwendung vorgeschlagen werden. Ferner wird auch vorgeschlagen, dass die konzentrische Lage der (miteinander verbundenen) äußeren und inneren Rohrleitungen durch sogenannte Abstandsringe, die auf die inneren Rohrabschnitte aufgelötet werden, sichergestellt wird.

Auch dieser Rohrverbindung haften gewisse Nachteile an, die man (zumindest im Flugzeugbau) dem Montage- und Wartungspersonal nicht zumuten möchte. So wird angenommen, dass eine Realisierung und Wartung von derartigen Rohrleitungsverbindungen nur mit größerem Aufwand machbar ist, weil schon aufgrund der nicht einfachen Schraubung der Muffe auf die links- und rechtsseitig angeordneten Dichtungsringe, die auf den rohrleitungsbefestigten Hülsen der zu verbindenden äußeren (wie auch inneren) Rohrleitungen positioniert sind, ein höherer Aufwand vermutet wird, dem druckschriftlich keine näheren Betrachtungen gewidmet werden. Bedenkt man ferner, dass die Verbindung von derartigen Rohrleitungen (und nicht nur im Flugzeugbau) absolut dicht ausgeführt sein muss, um möglichen Flüssigkeits- oder ggf. Treibstoffaustritt zu verhindem, wird bezweifelt, dass durch das (wie druckschriftlich angegeben) Aufzwingen der Dichtungsringe auf die Hülsen infolge der Muffenschraubung den Dichtungsringen nicht Quetsch- oder (langfristig) Rissgefahr droht, dabei Undichtigkeiten an den Verbindungsstellen, die sich auch später durch das Altern der Dichtelemente bemerkbar machen werden, vorhersehbar werden.

Nur unter Aufbringung von gebührender manueller Konzentration und Sorgfalt wird sich eine derartige Rohrleitungsverbindung realisieren lassen, die auch bei anfallenden Wartungs- und Instandhaltungsarbeiten (im Flugzeug auf engstem Raum) aufzubringen sind. Da die äußeren und inneren Rohrleitungen durch (über die Rohrleitungslänge im Abstand angeordnete) Abstandsringe auf Distanz gehalten werden, die (nur) auf die inneren Rohrleitungsabschnitte aufgelötet sind, wird bezweifelt, dass die vollständige Wirksamkeit einer Blitzschutzmaßnahme, die eine beabsichtigte Einbeziehung der (metallen ausgeführten) Rohrleitungsverbindung in die (bei Flugzeugen geforderte) Blitzschutzmaßnahme voraussetzt, während des Rohrleitungsbetriebes und auch bei vorzunehmenden Wartungsarbeiten gewährleistet wird. Da nur eine einseitige Befestigung dieser Abstandsringe auf der inneren Rohrleitung vorgeschlagen wird, wird mindestens an der Übergangsstelle zwischen Abstandshalter und letzteren aufliegender äußerer Rohrleitung eine erhöhter elektrischer Übergangswiderstand erwartet, der bspw. bei einer vom Blitzschlag getroffenen Flugzeugstruktur, die mindestens niedrigste elektrische Übergangswiderstände voraussetzt, sich nachteilig erweisen kann. Die ständige Aufrechterhaltung des Blitzschutzpotentialausgleichs (im Flugzeug) ist ein oberstes Gebot, die bei der Aufhebung der Verbindung jener Rohrleitungen, bspw. während stattfindender Wartungsarbeiten, nicht (oder möglichenfalls nur durch gesonderte Maßnahmen) abgesichert wird.

Demzufolge liegt der Erfindung die Aufgabe zugrunde, eine Anordnung zur Verbindung von zwei doppelwandig verlegten Rohrleitungen derart zu verbessern, wonach sich diese im Flugzeug gerade verlegte Rohrleitungen rationell montieren lassen und sich gleichfalls alle installierten Dichtungselemente, deren Dichtvermögen im Bereich von Anschluß- oder Verbindungsstellen dieser doppelwandigen Rohrleitungen nachlässt, unkompliziert austauschen lassen. Außerdem wird auf eine erleichterte Zugänglichkeit an diese doppelwandige Rohrleitungsinstallation und deren prophylaktische Kontrolle im ohnehin eng bemessenen Montagebereich geachtet. Gleichermaßen ist zu gewährleisten, dass die elektrische Verbindung der Anordnung mit der Flugzeugstruktur während der Ausführung von Wartungsarbeiten (wegen der ständigen Aufrechterhaltung des Blitzschutz-Potentialausgleiches) nicht unterbrochen wird und ein wiederholtes Ausrichten der Leitungsverbindung nach Abschluß der Wartungarbeiten entfällt.

Diese Aufgabe wird durch die im Anspruch 1 angegebenen Maßnahmen gelöst. In den weiteren Unteransprüchen sind zweckmäßige Ausgestaltungen dieser Maßnahmen angegeben.

Die Erfindung ist in einem Ausführungsbeispiel anhand der beigefügten Zeichnungen näher beschrieben.
Dazu zeigen die
- Fig. 1: eine bekannte Anordnung zur vorgesehenen Verbindung von zwei doppelwandig verlegten Rohrleitungen im nicht verbundenen Stadium;
- Fig. 2: die Anordnung nach der Fig. 1 im verbundenen Stadium der beiden doppelwandigen Rohrleitungen;
- Fig. 3: eine verbesserte Anordnung zur vorgesehenen Verbindung von zwei doppelwandig verlegten Rohrleitungen im nicht verbundenen Stadium;
- Fig. 4: die Anordnung nach der Fig. 3 im verbundenen Stadium der beiden doppelwandigen Rohrleitungen.

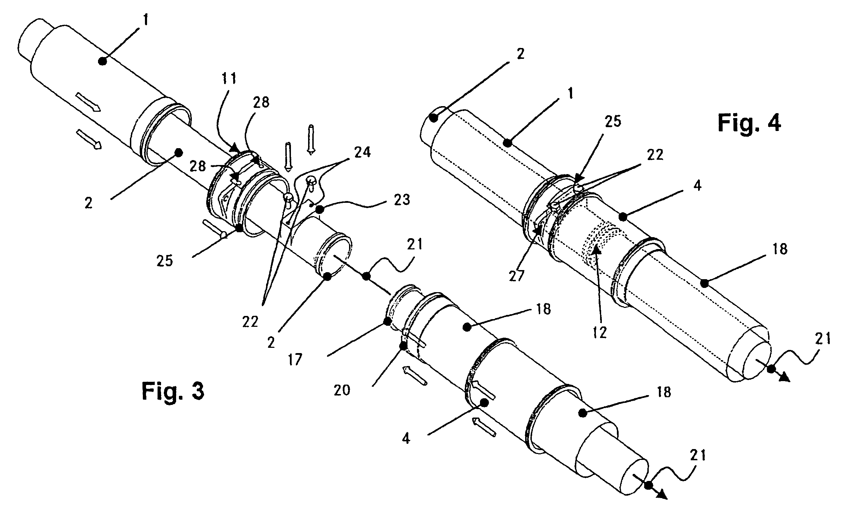

Hinsichtlich der bekannten Anordnung nach den Figuren 1 und 2 wird bereits einleitend ausgeführt, wobei dort besonders die Nachteile hervorgehoben werden. Es wird deswegen auf diese (dem Fachmann bekannte) Anordnung eingegangen, um das Verständnis für die Ausführungen nach den Figuren 3 und 4 zu fördern.

In der Fig. 1 werden nun zwei Trimmtankleitungen (doppelwandige Rohrleitungen) im nicht verbundenen Zustand dargestellt, welche jeweils aus einem Mantelrohr 1, 18 und einem von letzterem axial aufgenommenen Innenrohr 2, 17, das Kraftstoff führend ist, bestehen. Beide Trimmrohrleitungen weisen jeweils einen Rohrflansch 13, 14 auf. Dabei ist einer so genannten Flanschhülse 3 (Innenrohrhülse) stirnseitig ein erster Rohrflansch 13 angesetzt, wobei die Flanschhülse 3 einem ersten Innenrohr 2, das von einem ersten Mantelrohr 1 aufgenommen wird, axial (also entlang einer Rohrachse 21) beweglich gelagert ist. Ähnlich ist einer so genannten Mantelrohrhülse 4 stirnseitig ein zweiter Rohrflansch 14 angesetzt, wobei die Mantelrohrhülse 4 einem zweiten Mantelrohr 18, das ein zweites Innenrohr 17 umhüllt, axial (also entlang der Rohrachse 21) beweglich gelagert ist. Nach der Fig. 1 ist außerdem auf dem ersten Innenrohr 2 ein so genannter Ringflansch 15, den man- wegen seiner Funktion - auch als Stützscheibe bezeichnet, befestigt, der mit der Außenwandung des ersten Innenrohres 2 verschweißt ist. Erst später wird man diesen Ringflansch 15 als Verbindungselement zwischen Innen- und Mantelrohr(en) erkennen. Alle Flansche (Rohrflansche 13, 14 und Ringflansch 15) besitzen einen Umfang sechseckiger Gestalt, wobei der betreffenden Flanschfläche mehrere (umfänglich verteilte) Öffnungen 6 (Löcher) ausgenommen sind, deren Lage (bei jedem einzelnen Flansch) identisch ist. Geht man davon aus, dass das flanschabgewandte Hülsenende der Flanschhülse 3 hülsenumfänglich eine (Art) Überwurf 19 (Hülsenaufweitung) aufweist, der (die) dem (zu verbindenden) rohrendseitigen Außenwandungsbereich 10 des ersten Mantelrohres 1 aufsteckbar ist, dann lässt sich die Flanschhülse 3 vermittels dem Überwurf 19 mit dem ersten Mantelrohr 1, auf dessen anzuschließenden Rohrendbereich sich ein Dichtungselement befindet, befestigt verbinden. Geht man ferner davon aus, dass der anzuschließenden Rohrendbereich des zweiten Mantelrohres 18 auch eine (Art) Überwurf 20 (Hülsenaufweitung) aufweist, dann wird durch die axiale Bewegung der Mantelrohrhülse 4 deren (verengter) flanschabgewandter Hülsenendbereich den Überwurf 20 (die Hülsenaufweitung) in Bewegungsrichtung axial mitnehmen.

Setzt man voraus, dass die stirnseitig gegenüberstehenden Rohrenden des ersten und zweiten Innenrohres 2, 17 mit einem manschettenartigen dichtungsunterlegten Kuppelelement umfänglich gekuppelt sind, wodurch beide Innenrohre 2, 17 axial verbunden sind, dann wird die Mantelrohrhülse 4 den Kuppelbereich der Innenrohre 2, 17 umhüllen, sofern die Stirnfläche des zweiten Rohrflansches 14 (der Mantelrohrhülse 4 ) dem Ringflansch 15 anliegt.

Falls nun die Flanschhülse 3 (Innenrohrhülse) und die Mantelrohrhülse 4 in axialer Richtung zum Ringflansch 15 bewegt werden, und die betreffende stirnseitige Flanschfläche des ersten und zweiten Rohrflansches 13, 14 exakt der vorder und rückseitigen Flanschfläche des (dichtungsunterlegten) Ringflansches 15 anliegen, wird durch die - einander identisch liegenden - Öffnungen 6 (Löcher) jeweils eine Schraube 5 geführt, der scheibenunterlegt eine Gewindemutter geschraubt wird. Das Endergebnis einer derartig realisierten Anordnung von axial verbundenen Trimmleitungen (doppelwandig verlegten Rohrleitungen) wird in der Fig. 2 dargestellt, aus der man deren befestigte Verbindung entnehmen wird. Es wird hinzugefügt, dass zur rohrinneren Abdichtung (zwischen dem betreffenden Mantel- und dem Innenrohr) - wie angedeutet - entsprechende Dichtungselemente (so genannte Nullringe) verwendet werden, die vom ersten und zweiten Rohrflansch 13, 14 aus gegen den Ringflansch 15 gedrückt werden. Weiterhin werden wenigstens zwei dieser flanschbefestigten Schrauben 6 zur Befestigung der Anordnung an der metallenen Flugzeugstruktur verwendet. Um nun an dieser flanschbefestigten Verbindungsstelle der beiden doppelwandigen Trimmleitungen die dichtenden Nullringe zu wechseln, wird ein Lösen aller Schrauben 6 (und deren Entfernen) von der Befestigungsmutter unumgänglich, um den (angesetzten) zweiten Rohrflansch 16 (der Mantelrohrhülse 4) vom (als Rohrhalter benutzten) Ringflansch 15 abnehmen zu können. Dabei wird zwangsläufig auch die elektrische Leitungsverbindung zur Flugzeugstruktur - also der Blitzschutz-Potentialausgleich - unterbrochen. Im ungünstigen Fall wird man möglicherweise sogar die befestigte Verbindung des zweiten Mantelrohres 18 an der Mantelrohrhülse 4 aufheben und das zweite Mantelrohr 18 ausbauen (müssen). Da diese Leitungsverbindung aus mehreren Elementen (mit mehreren Trennstellen) aufgebaut ist, muss man nach Wiederherstellung des gesamten Trimmleitungs-Verbindungsaufbau und der Wiederherstellung von dessen Masseverbindung mit der Flugzeugstruktur diese Anordnung erneut ausrichten. Diese Maßnahme umfasst demnach sehr aufwendige (schwierige) Arbeitsschritte, wenn man bedenkt, dass die Arbeiten innerhalb einem sehr eng bemessenen Montagebereich erledigt werden.

Angemerkt wird, soweit noch nicht geschehen, dass Dichtungsringe, Unterlegscheiben und Sicherungsdrähte, welche die Anordnung komplettieren und für deren vollständige Umsetzung unabdingbar sind, in den Figuren 1 und 2 (und vorgreifend auch in den Figuren 3 und 4) nicht mit dargestellt sind.

Aus den Darstellungen der verbesserten Anordnung nach den Figuren 3 und 4 wird man wiederkehrende Elemente der Anordnung nach den Figuren 1 und 2 entnehmen, die sich in der Hauptsache auf eine erste doppelwandige Rohrleitung (mit einem ersten Mantelrohr 1 und einem ersten Innenrohr 2) und eine zweite doppelwandige Rohrleitung (mit einem zweiten Mantelrohr 18 und einem zweiten Innenrohr 17) beziehen. Dabei umhüllt das betreffende Mantelrohr 1 oder 18 jeweils das betreffende Innenrohr 2 oder 17, wodurch die doppelwandige Ausführung der axial zu verbindenden beiden Rohrleitungen angedeutet wird, die sich gerade (also entlang) einer (identisch benutzten) Rohrachse 21 erstrecken. Auch die Mantelrohrhülse 4, welche das zweite Mantelrohr 18 umhüllt, wird man in den Figuren 3 und 4 wieder finden, nur ohne den (nach den Figuren 1 und 2) stirnseitig (am zu befestigenden Hülsenende der Mantelrohrhülse 4) angesetzten zweiten Rohrflansch 14, welcher nach der Fig. 2 dem (nicht mehr verwendeten) Ringflansch 15 anliegt und letzterem durch eine Schraubensicherung befestigt wird. Gleichfalls befinden sich umfänglich dem zu verbindenden Rohrleitungsendbereich der beiden Mantelrohre 1, 18 jeweils ein Dichtungselement. Die Flanschhülse 3 (nach den Figuren 1 und 2) mit dem Überwurf 19 und dem ersten Rohrflansch 13 wird man auch nicht wiederfinden.

Hinzukommend diesen axial verlegten Rohrleitungen, deren (zur Verbindung vorgesehene) Rohrleitungsenden sich (nach der Fig. 3 stirnquerschnittsseitig) gegenüber stehen, ist axial beweglich der beiden (hier figurlich noch im nicht gekuppelten Zustand dargestellten) Innenrohre 2, 17 außerdem ein so genannter hülsenartiger Mantelrohrflansch 25 angeordnet. Dieser Mantelrohrflansch 25 wird die beiden Innenrohre 2, 17 außenumfänglich umhüllen, wobei auch ein (nachfolgend näher erläuterter) Fixierkörper 23, der beispielsweise auf dem ersten Innenrohr 2 sitzen wird, innerhalb dem Hülsenquerschnitt des Mantelrohrflansches 25 Platz finden wird. Der Mantelrohrflansch 25 wird als Verbindungselement der beiden Mantelrohre 1, 18 eingesetzt.

Dieser Teil der Anordnung zweier doppelwandig verlegter Rohrleitungen wird dermaßen erweitert, wonach man nahe dem zu verbindenden Rohrleitungsende des ersten Innenrohres 2, das dem gegenüberliegenden Rohrleitungsende des zweiten Innenrohres 17 mit einer (auch in der Fig. 4 nicht gezeigten) dichtungsunterlegten Rohrleitungsmanschette mechanisch gekuppelt wird, auf der Innenrohr-Außenwandung des ersten Innenrohres 2 - nach dieser Ausführung - den erwähnten Fixierkörper 23 befestigt. Denkbar wäre auch eine Befestigung auf der Innenrohr-Außenwandung des zweiten Innenrohres 17, wobei dann die (später erläuterten) Maßnahmen entsprechend anzupassen sind.

Dieser Fixierkörper 23 ist ein quaderähnlicher Körper, dessen quer zur Rohrachse 21 aufgespannte Grundfläche mit einer dem Rohraußendurchmesser des ersten Innenrohres (2) angepassten Form versehen ist, welche auf der Außenwandung des (beipielgewählten) ersten Innenrohres 2 befestigt ist. Beginnend der Deckfläche des Fixierkörpers 23 sind quer zur Rohrachse (21) zwei als Zylinderbohrung ausgeführte Bohrvertiefungen 24 mit definierter Bohrtiefe rohrradial eingelassen. Auf der Bohrwandung dieser Bohrvertiefungen 24 ist ein Innengewinde aufgebracht.

Geht man davon aus, dass der Mantelrohrflansch 25 auf dem Fixierkörper 23 platziert wird, dann wird man beobachten, dass auch der Mantelrohrflansch 25 zwei rohrradial gelegene Durchgangslöcher 28 besitzt, deren Lochachse in einer Endposition mit der rohrradial gelegenen Bohrvertiefungsachse (der einzelnen Bohrvertiefung 24 des Fixierkörpers 24) übereinstimmend angeordnet ist. Dabei sind dem Mantelrohrflansch 25 die beiden Durchgangslöcher 28 quer zur Hülsenachse liegend und zueinander beabstandet ausgenommen.

In dieser Situation befinden sich die Durchgangslöcher 28 mit den als Zylinderbohrung ausgeführten Bohrvertiefungen 24 in einer identischen Position, wobei bei einer derartigen rohrradial übereinstimmenden Achsenlage der Bohrungen der Mantelrohrflansch 25 auf dem Fixierkörper 23 angeordnet ist. Der Mantelrohrflansch 25 wird am Fixierkörper 24 mittels einer Schraubverbindung befestigt. Diese (durchaus übliche) Befestigung (von Körperelementen) wird derweise umgesetzt, wonach zunächst der Schraubenschaft einer Schraube 22 durch das betreffende Durchgangsloch 28 des Mantelrohrflansches 25 geführt wird, der dem Innengewinde der darunter befindlichen Zylinderbohrung (Bohrvertiefung 24) geschraubt wird.

Zusammenfassung lässt sich die verbesserte Anordnung (vereinfacht ausgedrückt) folgendermaßen beschreiben. Auf dem betreffenden Innenrohr 2, 17 ist ein kleiner Fixierkörper 23 - gewissermaßen als Anbindungsklotz ausgeführt - klotzartig befestigt. Dieses Innenrohr 2, 17 wird mit zwei Schrauben 22 dem Mantelrohrflasch 25 rohrradial befestigt. Zur Abdichtung der Schraubverbindung werden Dichtscheiben verwendet. Dieser Mantelrohrflansch 25 wird - von der Dichtverbindung unabhängig - an der (nicht gezeigten) metallenen Struktur, bspw. der Flugzeugstruktur, befestigt, wodurch der elektrische Schutzmaßnahme "Potentialausgleich" (insbesondere Blitzschutzpotentialausgleich) der strukturmasseverbundenen doppelwandigen Rohrleitungen gewährleistet wird. Der Masseanschluß des Mantelrohrflansches 25 soll seitwärts der Doppelschraubenbefestigung an der figurlich angedeuteten Masseanschluß-Verbindungsstelle 27 geschehen. Um an den betreffenden Trennstellen (zwischen den zwei Rohren) die Dichtringe des zweiten Mantelrohres 18 und die des betreffenden Innenrohres 2, 17 zu wechseln, ist es lediglich erforderlich, die Mantelrohrhülse 4, die eine dem Mantelrohrflansch 25 in axialer Richtung aufgeschobene geklemmte (nicht geschraubte) Hülse ist, (sich dem Mantelrohrflansch 25 in axialer Richtung entfernend) zu verschieben. Es muss zum Wechseln der Dichtringe (dem Ringflansch 15 nach den Figuren 1 und 2) keine (flanschbefestigte) Schraube 5 gelöst werden. Zum Wechseln der Dichtscheiben an den Schrauben 24, die den Mantelrohrflansch 25 mit dem (auf dem) Fixierkörper 23 (ersten Innenrohr 2) mechanisch verbinden (befestigen), braucht die bestehende Rohrverbindung nicht geöffnet werden. Während der Wartungsarbeiten wird die Leitungsverbindung mit der Flugzeugstruktur nicht aufgehoben, weil keine Notwendigkeit besteht, den fest geschraubten Zustand der Leitung(en) an der Struktur zu verändern, somit sich auch ein wiederholtes Ausrichten der Leitungslängen erübrigt. Neben diesem Vorteil wird die Teilevielfalt (im Vergleich der Anordnung nach den Figuren 1 und 2), bspw. durch Reduzierung des zähligen Schraubenanteils, reduziert.

Die Zugänglichkeit dieser Art Leitungsverbindung wird wesentlich verbessert, da sich alle Schraubbefestigungen im Sichtbereich befinden. Eine Inspektion der Kraftstoff führenden Innenrohr-Kupplung kann ohne ein Lösen von Scharubverbindungen erfolgen.

Die mit dieser Anordnung umsetzbaren Vorteile werden durch die radiale Schraubenbefestigung des Mantelrohrflansches 25 auf dem Fixierkörper 23 (i. d. F. dem beispielgemäßen ersten Innenrohr 2) erreicht. Die Anordnung nach den Figuren 3 und 4 gibt nur eine Ausführungsmöglichkeit mit einer Art radialer Innenrohr-Mantelrohrverbindung (mit Hilfe des Fixierkörpers 23) an. Diese radiale Rohrverbindung kann durchaus auch sternförmig, gegenüberliegend, unsymmetrisch oder aber auch axial versetzt gestaltet werden.

### Bezugszeichen

- 1: Mantelrohr, erstes
- 2: Innenrohr, erstes
- 3: Flanschhülse (Innenrohrhülse)
- 4: Mantelrohrhülse
- 5, 22: Schraube
- 6: Öffnung (für Schraube 5)
- 8: Nullring
- 10: rohrendseitiger Außenwandbereich (des Mantelrohres 1)
- 12: Innenrohrkupplung
- 13: Rohrflansch (der Flanschhülse 3), erster
- 14: Rohrflansch (der Mantelrohrhülse 4), zweiter
- 15: Ringflansch
- 17: Innenrohr, zweites
- 18: Mantelrohr, zweites
- 19: Überwurf (der Flanschhülse 3)
- 20: Überwurf (des zweiten Mantelrohres 18)
- 21: Rohrachse
- 23: Fixierkörper (auf Innenrohr 2), klotzartig
- 24: Bohrvertiefung (mit Innengewinde für Schrauben 22)
- 25: Mantelrohrflansch, hülsenartig
- 27: Masseanschluß-Verbindungsstelle
- 28: Durchgangsloch (Bohrung), hülsenradial

## Patentansprüche

1. Anordnung zur Verbindung von zwei doppelwandig verlegten Rohrleitungen, mit einer ersten Doppelwand-Rohrleitung, bei der ein erstes Innenrohr (2) von einem ersten Mantelrohr (1) umgeben ist, und einer zweiten Doppelwand-Rohrleitung, bei der ein zweites Innenrohr (17) von einem zweiten Mantelrohr (18) umgeben ist, und wenigstens einem hülsenartigen Rohrverbindungselement (25), das auf dem betreffenden Innenrohr (2, 17) rohraxial beweglich gelagert ist, wobei ein erstes Rohrleitungsverbindungselement (25) dem ersten Mantelrohr (1) und ein zweites Rohrleitungsverbindungselement (4) dem zweiten Mantelrohr (18) einseitig verbunden ist, und außerdem die beiden sich gegenüberstehenden Rohrleitungsenden der beiden Innenrohre (2, 17) miteinander gekuppelt sind, wobei die beiden Rohrieitungsverbindungselemente (4, 25) betderseitig verbunden sind,
**dadurch gekennzeichnet, dass** nahe einem Rohrleitungsende des ersten Innenrohres (2), das dem gegenüberliegenden Rohrleitungsende des zweiten Innenrohres (17) gekuppelt ist, auf der Innenrohr-Außenwandung des ersten Innenrohres (2) ein Fixierkörper (23) befestigt ist, dem wenigstens eine rohrradial eingelassene Bohrvertiefung (24) der bohrwandseitig ein Innengewinde aufgebracht ist, ausgenommen ist, und das erste Innenrohr (2) von dem ersten Rohrleitungsverbindungselement, das als ein hülsenartiger Mantelrohrflansch (25) ausgebildet ist, umgeben ist, dem wenigstens ein rohrradial gelegenes Durchgangsloch (28) ausgenommen ist, dessen Lochachse in einer Endposition mit der rohrradial gelegenen Bohrvertiefungsachse übereinstimmend angeordnet ist, wobei bei einer derartigen rohrradial übereinstimmenden Achsenlage der Mantelrohrflansch (25) auf dem Fixierkörper (23) angeordnet und mit einer durch das Durchgangsloch (28) geführten und der Bohrvertiefung (24) geschraubten Schraube (22) am ersten Innenrohr (2) befestigt ist.

2. **Anordnung** nach Anspruch 1, **dadurch gekennzeichnet, dass** der Fixierkörper (23) ein quaderähnlicher Körper ist, dessen Grundfläche, die quer zur Rohrachse (21) angeordnet ist, mit einer dem Rohraußendurchmesser des ersten Innenrohres (2) angepassten Form versehen ist, und dem beginnend der Deckfläche wenigstens zwei quer zur Rohrachse (21) als Zylinderbohrung ausgeführte Bohrvertiefungen (24) definierter Bohrtiefe eingelassen sind.

3. **Anordnung** nach Anspruch 1, **dadurch gekennzeichnet, dass** dem hülsenartigen Mantelrohrflansch (25) wenigstens zwei quer zur Hülsenachse liegende und beabstandet angeordnete Duchgangslöcher (28) ausgenommen sind.

4. **Anordnung** nach Anspruch 1, **dadurch gekennzeichnet, dass** das zweite Rohrleitungsverbindungselement eine Mantelrohrhülse (4) ist.

## Claims

1. Arrangement for connecting two pipelines installed in a double-walled manner, comprising a first double-walled pipeline, in which a first inner pipe (2) is surrounded by a first casing pipe (1), and a second double-walled pipeline, in which a second inner pipe (17) is surrounded by a second casing pipe (18), and at least one sleeve-like pipe connecting element (25), which is mounted on the relevant inner pipe (2, 17) so as to be movable axially of the pipe, wherein a first pipeline connecting element (25) is connected at one end to the first casing pipe (1) and a second pipeline connecting element (4) is connected at one end to the second casing pipe (18), and moreover the two mutually facing pipeline ends of the two inner pipes (2, 17) are coupled to one another, wherein the two pipeline connecting elements (4, 25) are connected at both ends,
**characterized in that** close to a pipeline end of the first inner pipe (2) that is coupled to the opposing pipeline end of the second inner pipe (17) there is fastened on the inner pipe outer wall of the first inner pipe (2) a fixing body (23), from which is relieved at least one bore-like indentation (24), which is let in radially of the pipe and on the bore wall of which an internal thread is provided, and the first inner pipe (2) is surrounded by the first pipeline connecting element, which takes the form of a sleeve-like casing pipe flange (25), from which is relieved at least one through-hole (28), which is situated radially of the pipe and the hole axis of which in a final position coincides with the axis of the bore-like indentation situated radially of the pipe, wherein given such an - in relation to the pipe - radially coincident axis position the casing pipe flange (25) is disposed on the fixing body (23) and fastened to the first inner pipe (2) by means of a screw (22), which is passed through the through-hole (28) and screwed in the bore-type indentation (24).

2. **Arrangement** according to claim 1, **characterized in that** the fixing body (23) is a body similar to a rectangular solid, of which the base, which is disposed transversely of the pipe axis (21), is provided with a shape adapted to the pipe outside diameter of the first inner pipe (2), and in which, starting from the top surface, are let at least two bore-type indentations (24) of a defined drilling depth, which are constructed in the form of a cylindrical bore transversely of the pipe axis (21).

3. **Arrangement** according to claim 1, **characterized in that** from the sleeve-like casing pipe flange (25) there are relieved at least two through-holes (28), which lie transversely of the sleeve axis and are spaced apart.

4. **Arrangement** according to claim 1, **characterized in that** the second pipeline connecting element is a casing pipe sleeve (4).

## Revendications

1. Dispositif de raccordement pour deux tubes à double paroi, avec un premier tube à double paroi dans lequel un premier tube intérieur (2) est entouré d'un premier tube périphérique (1), et avec un deuxième tube à double paroi dans lequel un deuxième tube intérieur (17) est entouré d'un deuxième tube périphérique (18), et avec au moins un élément de raccordement de tubes (25) en forme de gaine disposé sur le tube intérieur correspondant (2, 17) de manière à pouvoir se déplacer dans le sens de l'axe du tube, un premier élément de raccordement de tubes (25) ayant été relié d'un seul côté au premier tube périphérique (1) et un deuxième élément de raccordement de tubes (4) ayant été raccordé d'un seul côté au deuxième tube périphérique (18), les deux extrémités de tube opposées des deux tubes intérieurs (2, 17) ayant été couplées l'une à l'autre et les deux éléments de raccordement des tubes (4, 25) ayant été raccordés des deux côtés,
et **caractérisé en ce qu'**un corps de fixation (23) a été fixé près d'une des extrémités du premier tube interne (2) couplée avec l'extrémité opposée du deuxième tube interne (17), sur la paroi externe du premier tube interne (2), au moins un enfoncement de forage (24) pratiqué dans le sens radial du tube, et sur lequel a été apposé un filetage interne, du côté de la paroi de forage, ayant été dégagé du corps de fixation (23), et le premier tube interne (2) étant entouré par un premier élément de raccordement de tubes conçu sous la forme d'un rebord de tube périphérique (25) en forme de gaine, duquel a été dégagé au moins un orifice de passage (28) situé dans le sens radial du tube, et dont l'axe a été positionné dans une position finale correspondant à l'axe de l'enfoncement de forage situé dans le sens radial du tube (25), le rebord du tube périphérique (25) étant, dans une telle position axiale coïncidant avec le rayon du tube, situé sur le corps de fixation (23) et fixé au premier tube interne (2) à l'aide d'une vis (22) guidée à travers l'orifice de passage (28) et vissée à l'enfoncement de forage (24).

2. Dispositif selon la revendication 1, **caractérisé en ce que** le corps de fixation (23) est un corps en forme de parallélépipède rectangle dont la surface de base disposée transversalement par rapport à l'axe du tube (21) est dotée d'une forme adaptée au diamètre extérieur du premier tube interne (2) et **en ce qu'**au moins deux enfoncements de forage (24) de profondeur définie exécutés sous la forme d'alésages cylindriques ont été pratiqués transversalement par rapport à l'axe du tube (21), à partir de la surface de recouvrement.

3. Dispositif selon la revendication 1, **caractérisé en ce qu'**au moins deux orifices de passage (28) transversaux par rapport à l'axe de la gaine et distants les uns des autres ont été dégagés du rebord du tube périphérique en forme de gaine.

4. Dispositif selon la revendication 1, **caractérisé en ce que** le deuxième élément de raccordement de tubes est une gaine de tube périphérique (4).
